# EUROPEAN PATENT SPECIFICATION

(11) **EP 2 341 330 B1**
(45) Date of publication and mention of the grant of the patent: **06.05.2020**
(21) Application number: 10382359.7
(22) Date of filing: 27.12.2010
(51) Int. Cl.: G01N 21/88, G01N 21/952

(54) **Image capturing and processing system for hot profiles of revolution**
Bilderfassung und Verarbeitungssystem für heisse Rotationsprofile
Système de capture et de traitement d'images pour profilés à chaud de révolution

(30) Priority: 29.12.2009 ES 200931287
(43) Date of publication of application: 06.07.2011
(73) Proprietor: Fundación Robotiker, 48170 Zamudio (Vizcaya) (ES)
(72) Inventor: Gutiérrez Olabarria, José, Ángel, 48170, ZAMUDIO (Vizcaya) (ES); Cruz-López Claret, Antonio, 48170, ZAMUDIO (Vizcaya) (ES); Lago Ruiz, Alberto, 48170, ZAMUDIO (Vizcaya) (ES); Gonzàlez Rodriguez, Roberto, 48170, ZAMUDIO (Vizcaya) (ES); Bilbao Martxueta, Alfredo, 48170, ZAMUDIO (Vizcaya) (ES)
(74) Representative: Carpintero Lopez, Francisco

(56) References cited:
- WO-A1-01/17264
- FR-A1- 2 887 028
- US-A1- 2008 063 426
- US-A1- 2010 246 974

## Description

### Field of the Invention

The present invention relates to inspection systems for high temperature objects. More specifically, it relates to a system for capturing and processing the image, particularly of objects with hot profiles of revolution, such as steel tubes during the rolling process thereof or continuous casting products (profiles, etc.).

### Background of the Invention

Surface inspections of parts are performed during material rolling process, especially in steel rolling. As hot surfaces present a radiation emission related to the thermal emission in the IR, red, orange and yellow bands, the image obtained of said surface is faded and is procured with great difficulties, as the device which captures the light reflected by the surface is also sensitive to the radiation emitted by the part, and this saturates the sensor. This effect is reduced by using inspection aided by cameras and illumination sources in the spectrum far from the red light emitted by the sample. A system using this type of illumination is described in patent US 6859285 B1. A source emitting electromagnetic radiation in a wavelength band far from that corresponding to the one emitted by the incandescent object is provided in the device described in this patent. However, traditional configurations of the illumination sources and camera such as described in said patent cause glares and illumination difficulties, especially on non-flat surfaces such as profiles, tubes and surfaces of revolution in general. Furthermore, these systems can not be applied to inline automatic inspection devices which need to have a higher number of images, for example while a tube is displaced by a rolling mill train. Other systems for detecting surface defects are disclosed in US 2008/0063426 A1, FR 2887028 A1 and WO 2009/028883 A1.

### Object of the Invention

The object of the invention is to alleviate the technical problems mentioned in the previous section and to facilitate inline inspection of tube-shaped hot objects or with other complex surfaces such as the surfaces of revolution. To that end, an image capturing and processing device for hot profiles of revolution is proposed as claimed in claim 1, comprising illumination sources capable of emitting light in a wavelength different from that emitted by the surface and three systems, each formed by at least two linear light sources and a corresponding linear CCD camera, the three systems being located in a plane perpendicular to the surface and distributed in a circumference at 120° with respect to one another. Preferred embodiments are defined in the dependent claims. The device is optionally provided with a narrow band-pass filter centered on the wavelength of the light emitted by the laser and a bandwidth of 10 nm. An infrared filter can also be incorporated. The laser is preferably of the type which emits blue light of about 473 nm and its emission line has a width equal to or greater than 3 mm and an angular aperture of 16°. The lasers and the camera in each system maintain an angular relationship of 15° with the surface. The camera is preferably located between the two laser sources in each system.

The device can further incorporate a cooling system comprising thermally insulated casings provided with compressed air injection means suitable for housing each system independently.

### Brief Description of the Drawings

For the purpose of aiding to better understand the features of the invention according to a preferred practical embodiment thereof, a set of drawings is attached in which the following has been depicted with an illustrative and non-limiting character:
Figure 1 shows the laser sources and camera used in a preferred embodiment of the invention.
Figure 2 shows the relative position of the laser
Figure 3 shows a graph representing the sensitivity of a CCD camera with respect to wavelength.

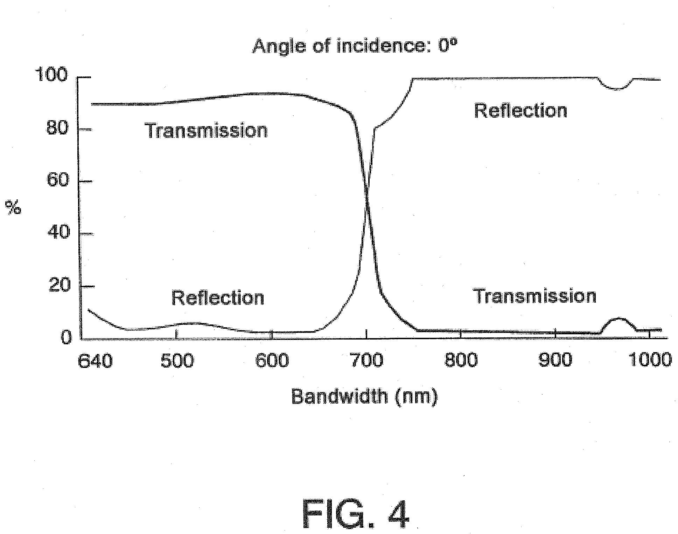

Figure 4 shows a transmission graph of the infrared filter incorporated in the invention.
Figure 5 shows a diagram of the arrangement of the three systems at 120°.

### Detailed Description of the Invention

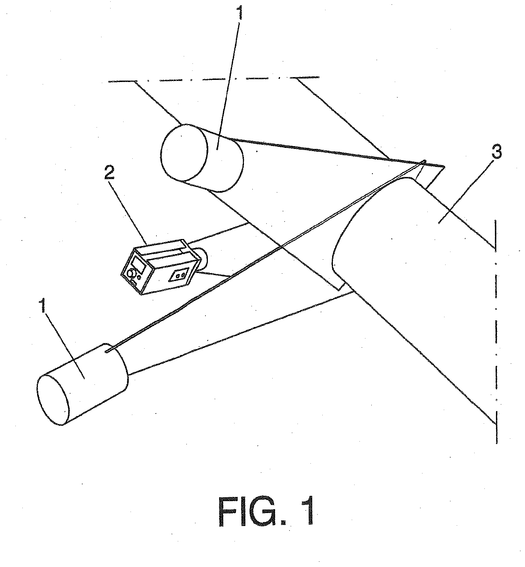

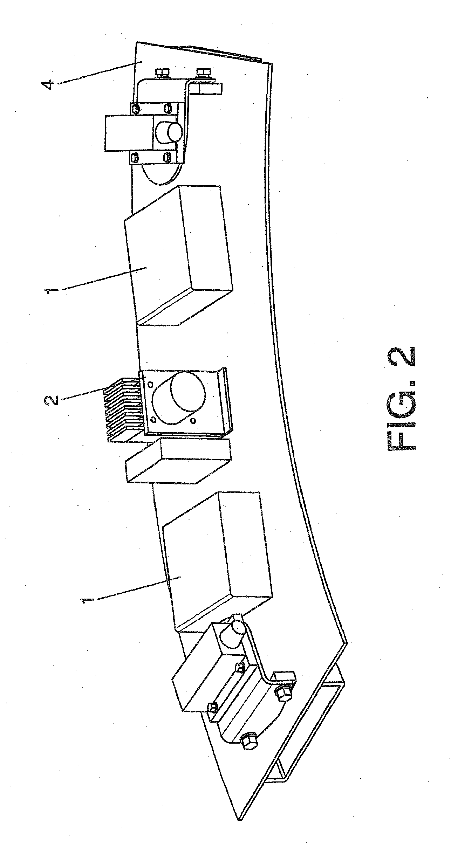

The device of the invention can be seen in Figures 1, 2 and 5 and it comprises three systems (4) with at least two illumination sources (1), preferably laser for its characteristics of output, coherent and structured light and monochromatic nature in a wavelength far from that corresponding to the emission of the surface to be inspected, and one CCD camera (2) per system. The most advantageous application of the system is when it is applied to steel tubes in a rolling process. Figure 1 shows a tube located in the rolling shaft and a system with its two illumination sources and corresponding camera. Both the illumination sources (at least 2 although there could be more depending on the application) and the cameras are linear-type. In the ideal configuration, the two lasers are on both sides of the camera so that there is more light output in the area that is mostly dissipated towards the sides of the tube.

The linear cameras are used in continuous production systems such as in paper, fabric, wood or steel applications. A linear camera generates a line-by-line image of the length required by the user, such that an endless image can be generated. Uniformity in the sense of the rolling shaft (3) is thus assured and simplified because the image is formed from the movement of the element such that lines with identical light distribution will be captured. The focus of the illumination is multipoint. The lasers and the camera maintain an angular relationship of approximately 15° between one another and the rolling shaft such that intensity maximums are obtained in desired the areas. The lasers in turn have an angular aperture of 16° and a line thickness of 3 mm in the surface of the tube. A uniform distribution of perceived output is obtained with this arrangement. This distribution, together with the sensitivity of the cameras, provides a very high image quality in each line, in turn achieving automatically processable images on the 50,000 lines which make up an average tube with a diameter comprised between 140 and 210 mm and a length which may exceed 25 m.

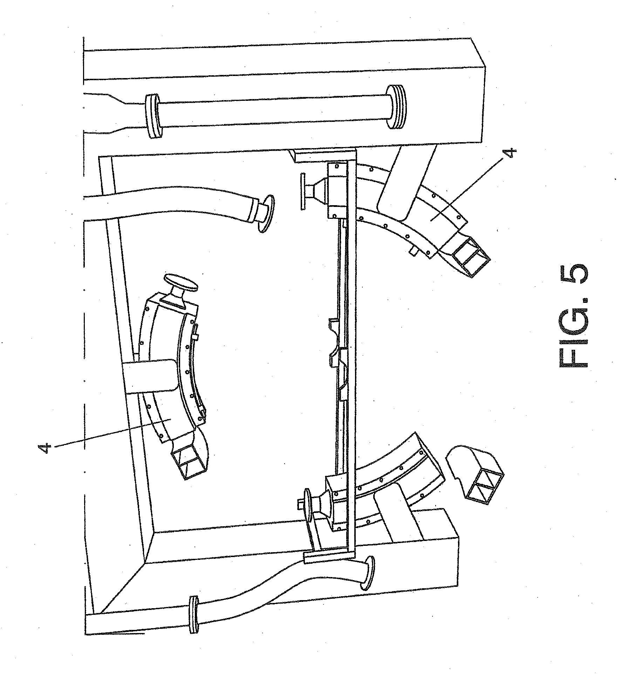

As a result of the geometry of the system which incorporates three image capturing systems (Figure 5) arranged in one and the same plane perpendicular to the plane of the rolling shaft and distributed at 120°, it is possible to capture the tube to be inspected in its entirety in real-time and continuously.

Further, specular reflection can be minimized with a non-normal orientation of the elements of the system with respect to the surface.

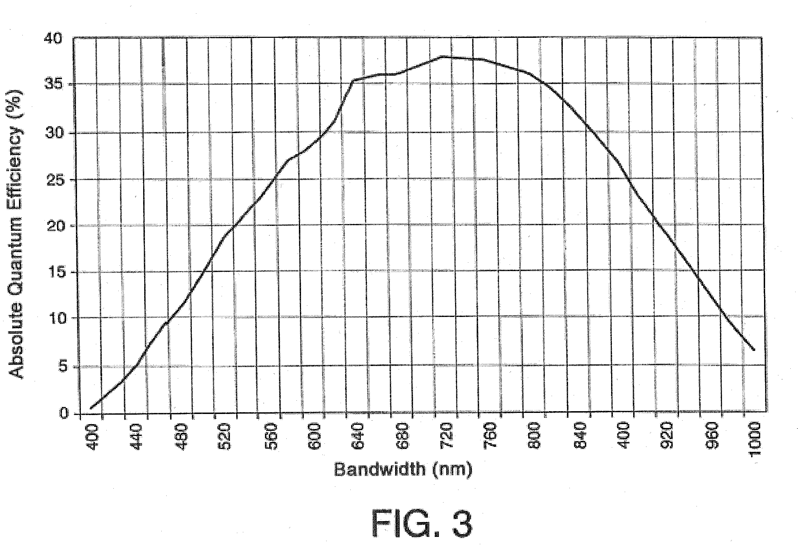

To achieve a differentiable illumination, wavelengths from the green (532 nm), blue (473 nm) or violet (405 nm) ranges of the spectrum can be used, all of them being are far enough away from the emission of the hot steel. According to these emission curves (temperatures between 100°C and 1500°C), violet would be preferred, followed by blue and green, since the emission of the steel is lower in this band. However, other aspects must be considered, such as the sensitivity of the CCD and the cost of the source. Figure 3 shows the typical sensitivity of a CCD camera. From the sensitivity of the camera point of view, green illumination has advantages, as the light output could be less, but with the drawback that it begins to overlap with the yellow from the emission of the steel. Contrarily, violet is the worst option. With respect to price, green illumination is also preferred to blue or violet. It is deduced from experimental measurements that blue illumination is preferable, since violet requires higher light outputs due to the lower sensitivity of the CCD in that band.

The high powered (> 100 mW) 473 nm laser is the preferred source over other possible alternatives. It is necessary to define stringent stability requirements to avoid oscillations in the light output (<5% RMS in 4 hours). The laser line must have a minimum width of 3 mm, with a visually uniform output distribution along the line and a Gaussian distribution in width.

The filtration system is suitable for the emission from the steel in the red range. It comprises a pass-band filter, preferably narrow band-pass centered on 470 nm (for the case in which blue light is used) and a 10 nm band and an infrared filter. Both filters help the CCD camera to only receive radiation in the desired wavelength band and the incorporation of infrared filters further protects the electronic systems from heat radiation.

Special casings suitably thermally insulated and in which compressed air from a cooling circuit is injected are incorporated into the system (camera and sources) to protect the equipment from the heat risk and the harsh environment. This air ventilates the systems and the remaining air is expelled through the area of the windows through which the lasers project their light beam and the camera captures the image, achieving a high pressure in the area which prevents the deposition of scale, oxides, dust and liquids. That airflow further improves the blurring effect caused by the transition between the high temperature air close to the part and the room temperature air. Additional blowers could be used for this purpose in other applications.

Once the captured images of the entire surface of the production are recorded, the images are processed by means of a customized software which uses an assisted learning system based on the Support Vector Machine statistical method. The system learns categories of defects from different examples by means of this algorithm, automatically detecting and classifying the most important production defects. Areas of interest of the complete image are studied for that purpose, in which various types of descriptor (of color or in this case of the grey level as the mean, variance, of texture as statistical and structural and of shape as the area of objects, etc.) are obtained and are fed to sorter based on the mentioned SVM algorithms.

## Claims

1. Image capturing and processing device for hot surface of revolution profiles (3), comprising linear illumination sources which are lasers capable of emitting light in a wavelength different from that emitted by the surface, wherein it comprises three systems, each formed by such at least two linear light sources (1) and a corresponding linear CCD camera (2), wherein each system maintains an angular relationship of 15° with the surface and the three systems are distributed in a circumference at 120° with respect to one another, and the three systems are located in a plane perpendicular to the surface, and wherein the lasers and the camera maintain an angular relationship of approximately 15° between one another.

2. Device according to claim 1, **characterized in that** it comprises a narrow band-pass filter centered on the wavelength of the light emitted by the laser and a 10 nm band.

3. Device according to any of the previous claims, **characterized in that** it incorporates an infrared filter.

4. Device according to any of the previous claims, **characterized in that** the laser emits blue light of 473 nm.

5. Device according to any of the previous claims, **characterized in that** the emission line of the lasers has an angular aperture of 16° and a line thickness of 3 mm in the surface.

6. Device according to any of the previous claims, **characterized in that** the camera is located between the two laser sources in each system.

7. Device according to any of the previous claims, **characterized in that** it incorporates a cooling system comprising thermally insulated casings provided with compressed air injection means suitable for housing each system independently.

## Patentansprüche

1. Bilderfassungs- und -verarbeitungsvorrichtung für die heiße Oberfläche von Rotationsprofilen (3), umfassend lineare Beleuchtungsquellen, bei denen es sich um Laser handelt, die Licht in einer anderen als der von der Oberfläche emittierten Wellenlänge emittieren können, wobei sie drei Systeme umfasst, die jeweils aus wenigstens zwei solcher linearen Lichtquellen (1) und einer entsprechenden linearen CCD-Kamera (2) bestehen, wobei jedes System eine Winkelbeziehung von 15° zu der Oberfläche aufrechterhält und die drei Systeme in einem Umfang von 120° zueinander verteilt sind und sich die drei Systeme in einer Ebene senkrecht zu der Oberfläche befinden und wobei die Laser und die Kamera eine Winkelbeziehung von ungefähr 15° zueinander aufrechterhalten.

2. Vorrichtung gemäß Anspruch 1, **dadurch gekennzeichnet, dass** sie einen Engpassfilter umfasst, der auf die Wellenlänge des von dem Laser emittierten Lichts und ein 10-nm-Band zentriert ist.

3. Vorrichtung gemäß einem der vorstehenden Ansprüche, **dadurch gekennzeichnet, dass** sie einen Infrarotfilter beinhaltet.

4. Vorrichtung gemäß einem der vorstehenden Ansprüche, **dadurch gekennzeichnet, dass** der Laser blaues Licht von 473 nm emittiert.

5. Vorrichtung gemäß einem der vorstehenden Ansprüche, **dadurch gekennzeichnet, dass** die Emissionslinie der Laser eine Winkelöffnung von 16° und eine Liniendicke von 3 mm in der Oberfläche aufweist.

6. Vorrichtung gemäß einem der vorstehenden Ansprüche, **dadurch gekennzeichnet, dass** sich die Kamera in jedem System zwischen den zwei Laserquellen befindet.

7. Vorrichtung gemäß einem der vorstehenden Ansprüche, **dadurch gekennzeichnet, dass** sie ein Kühlsystem beinhaltet, das thermisch isolierte Gehäuse umfasst, die mit Drucklufteinleitungseinrichtungen versehen sind, welche geeignet sind, jedes System unabhängig unterzubringen.

## Revendications

1. Dispositif de capture et de traitement d'images pour la surface chaude de profils de révolution (3), comprenant des sources d'éclairage linéaires qui sont des lasers capables d'émettre de la lumière sur une longueur d'onde différente de celle émise par la surface, comprenant trois systèmes formés chacun par au moins deux de ces sources lumineuses linéaires (1) et une caméra CCD linéaire (2) correspondante, dans lequel chaque système maintient une relation angulaire de 15° avec la surface et les trois systèmes sont répartis et espacés entre eux de 120° sur une circonférence, les trois systèmes étant situés dans un plan perpendiculaire à la surface, et dans lequel les lasers et la caméra maintiennent une relation angulaire d'environ 15° entre eux.

2. Dispositif selon la revendication 1, **caractérisé en ce qu'**il comprend un filtre passe-bas étroit centré sur la longueur d'onde de la lumière émise par le laser et une bande de 10 nm.

3. Dispositif selon l'une quelconque des revendications précédentes, **caractérisé en ce qu'**il possède un filtre à infrarouges.

4. Dispositif selon l'une quelconque des revendications précédentes, **caractérisé en ce que** le laser émet une lumière bleue de 473 nm.

5. Dispositif selon l'une quelconque des revendications précédentes, **caractérisé en ce que** la ligne d'émission des lasers a une ouverture angulaire de 16° et une épaisseur de ligne de 3 mm dans la surface.

6. Dispositif selon l'une quelconque des revendications précédentes, **caractérisé en ce que** la caméra est située entre les deux sources laser dans chaque système.

7. Dispositif selon l'une quelconque des revendications précédentes, **caractérisé en ce qu'**il possède un système de refroidissement comprenant des boîtiers isolés thermiquement dotés de moyens d'injection d'air comprimé appropriés pour abriter chaque système indépendamment.
